**Europäisches Patentamt**

**European Patent Office**

**Office européen des brevets**

(11) Veröffentlichungsnummer: **0 173 798**
**B1**

# (12) EUROPÄISCHE PATENTSCHRIFT

(45) Veröffentlichungstag der Patentschrift:
12.04.89

(21) Anmeldenummer: 85105965.9

(22) Anmeldetag: 15.05.85

(51) Int. Cl.⁴: **B 65 B 59/00**, B 65 G 17/34

(54) **Mitnehmereinrichtung für in einer Abfüllverpackungsmaschine zu bearbeitende Behälter.**

(30) Priorität: 24.08.84 DE 3431174

(43) Veröffentlichungstag der Anmeldung:
12.03.86 Patentblatt 86/11

(45) Bekanntmachung des Hinweises auf die Patenterteilung:
12.04.89 Patentblatt 89/15

(84) Benannte Vertragsstaaten:
AT BE CH DE FR GB IT LI LU NL SE

(56) Entgegenhaltungen:
FR-A- 2 112 150
US-A- 2 850 046
US-A- 3 225 889

(73) Patentinhaber: Lieder Maschinenbau GmbH & Co. KG,
Postfach 40, D-3033 Schwarmstedt (DE)

(72) Erfinder: Grüne, Helmut, Mühlenweg 9A,
D-3033 Schwarmstedt (DE)
Erfinder: Nienstedt, Wolfgang, Dipl.-Ing., Hohes
Feld 3 OT Grindau, D-3033 Schwarmstedt (DE)

(74) Vertreter: Heidt, Gert, Dr. Dipl.-Ing., Neuer Wall 59 III,
D-2000 Hamburg 36 (DE)

## Beschreibung

Mitnehmereinrichtung für in einer Abfüllverpackungsmaschine zu bearbeitende Behälter.

Die Erfindung betrifft eine Mitnehmereinrichtung für entlang eines Umlenkrollen aufweisenden Transportbandes zu befördernde Behälter, die mindestens eine Mitnehmerplatte aufweist, die den zu befördernden Behälter trägt und in deren Bereich mindestens ein Adapter angeordnet ist, der mindestens eine den Behälter aufnehmende Öffnung aufweist und mit der Mitnehmerplatte lösbar verbunden ist.

In der FR-A 2 112 150 ist eine Mitnehmereinrichtung beschrieben, bei der in einer Mitnehmerplatte Aufnahmeöffnungen vorgesehen sind, in die die Adapter aus einer Richtung eingeschoben werden, die einer die zu befördernden Behälter befüllenden Füllvorrichtung abgewandt angeordnet ist. Diese Anordnung der Adapter macht es erforderlich, dass sich das mit der Anlagenumrüstung befasste Montagepersonal zur Auswechselung der Adapter unter die Abfüllverpackungsmaschine begibt. Durch die hier vorherrschenden beengten Arbeitsbedingungen entsteht ein hoher Zeitaufwand, der dazu führt, dass ein häufiges Auswechseln der Adapter mit hohen Kosten verbunden ist. Zur Verhinderung eines Herausfallens der Adapter aus der Mitnehmerplatte sind Verschraubungen vorgesehen. Hierbei verwendete Schraubenbolzen beaufschlagen die Adapter im Bereich von Befestigungsrändern und greifen mit ihren Schäften in Bohrungen ein. Die Verschraubung der Adapter mit der Mitnehmerplatte verursacht einen weiteren hohen Zeitaufwand. Dies resultiert vor allem daraus, dass eine Vielzahl von Schraubenbolzen in die dafür vorgesehenen Bohrungen eingeführt und festgezogen werden müssen. Gerade das Einführen der Schraubenbolzen in die Bohrungen bereitet aufgrund der beengten Verhältnisse unter der Abfüllverpackungsmaschine aber einen hohen Arbeitsaufwand. Derartige Mitnehmereinrichtungen können wirtschaftlich demzufolge nur für derartige Abfüllverpackungsmaschinen verwendet werden, bei denen eine Auswechselung der Adapter nur in grösseren zeitlichen Abständen erforderlich ist.

In der US-A 2 850 046 wird eine Behälterbefüllvorrichtung beschrieben, die einen mit einer Hubvorrichtung verbundenen Aufnahmerahmen aufweist, in den ein Adapter eingelegt ist. Der Adapter liegt dabei lediglich lose auf einem Halterungskragen auf. Im Bereich des Adapters sind Aufnahmeöffnungen angeordnet, in die die zu befüllenden Behälter eingeführt werden. Im Bereich ihrer in lotrechter Richtung unteren Enden stehen die Behälter auf einer den Tragrahmen in lotrechter Richtung nach unten begrenzenden Basisplatte. Der Adapter ist somit lediglich zur Ausrichtung und nicht zur Halterung der zu befüllenden Behälter vorgesehen. Bei einem lockeren Aufliegen des Adapters auf den Tragrahmen besteht bei einem Anheben der Behälter stets die Gefahr, dass gemeinsam mit den Behältern auch der Adapter angehoben wird und gegenüber dem Tragrahmen verrutscht. Die Verwendung von lose aufliegenden Adaptern für Mitnehmereinrichtungen, die als Endlosband ausgebildet sind, ist darüber hinaus nicht möglich, da die Adapter während des Rücklaufes der Mitnehmereinrichtung von den Mitnehmerplatten abfallen würden.

In de US-A 3 225 889 wird eine Mitnehmereinrichtung beschrieben, die eine im wesentlichen kreisförmig ausgebildete Mitnehmerplatte aufweist, die im Bereich ihres Zentrums von einer Antriebswelle durchdrungen ist, die sich im wesentlichen senkrecht zu einer von der Mitnehmerplatte aufgespannten Ebene erstreckt. Im Bereich ihres Randes ist die Mitnehmerplatte mit Adaptern verschraubt. Die Mitnehmerplatte und die Adapter überlappen sich im Bereich ihrer einander zugewandten Begrenzungen in einem geringen Bereich ihrer Ausdehnung. Zur Verhinderung eines Abkippens der Adapter ist es somit zwingend erforderlich, eine Verschraubung der Adapter mit der Mitnehmerplatte vorzusehen.

Auch bei der in dieser Druckschrift beschriebenen Mitnehmereinrichtung ist ein schnelles Auswechseln der Adapter somit nicht möglich, da die Verbindungsschrauben zunächst gelöst und zur Befestigung der neuen Adapter anschliessend wieder angezogen werden müssen. Bis zu einem vollständigen Anziehen der Verschraubungen müssen die Adapter darüber hinaus abgestützt werden, um ein Verkanten und eine damit verbundene Beschädigung der Schraubenbolzen zu vermeiden.

Aufgabe der vorliegenden Erfindung ist es daher, eine Mitnehmereinrichtung der eingangs genannten Art so zu verbessern, dass mit ihrer Hilfe eine Umrüstung einer Abfüllverpackungsmaschine auf ein geändertes Behälterformat schnell und kostengünstig möglich ist.

Diese Aufgabe wird erfindungsgemäss dadurch gelöst, dass mindestens ein den Adapter mit der Mitnehmerplatte verbindender Bolzen eine Rastung aufweist, die von einer im Bereich des Adapters angeordneten Gegenrastung beaufschlagt ist.

Eine Ausbildung eines den Adapter und die Mitnehmerplatte verbindenden Elementes als Bolzen ermöglicht ein einfaches Zusammenstecken des Adapters und der Mitnehmerplatte. Es erfolgt gleichzeitig in einfacher Weise eine Zentrierung des Adapters, so dass Ausnehmungen im Bereich des Adapters, im Bereich von in der Mitnehmerplatte vorgesehenen Ausnehmungen angeordnet sind. Die im Bereich des Bolzens angeordnete Rastung vermeidet zuverlässig ein unbeabsichtigtes Trennen des Adapters von der Mitnehmerplatte. Ein derartiges unbeabsichtigtes Trennen des Adapters kann beispielsweise auftreten, wenn im Bereich des Adapters gehaltene Behälter entnommen werden. Die Behälter liegen mindestens in einem Bereich ihrer Begrenzung an Wandungen des Adapters an, so dass auf den Behälter einwirkende Kräfte mindestens teilweise auf den Adapter übertragen werden.

Bei einer Ausbildung der Mitnehmereinrichtung als Endlosförderband mit Adaptern, die im Bereich einer Befüllebene in lotrechter Richtung oberhalb der Mitnehmerplatte angeordnet sind, sind die Adapter bei einem Rücklauf der Mitnehmerplatte in lotrechter Richtung unterhalb dieser angeordnet. Durch die in die Gegenrastung eingreifende Rastung wird während dieses Rücklaufes ein Abfallen des Adapters von der Mitnehmerplatte zuverlässig verhindert.

Die Rastung und die Gegenrastung sind so ausgebildet, dass sie einander federnd beaufschlagen. Während des Einschiebens des Bolzens in eine dafür vorgesehene Aufnahmevorrichtung federt die Gegenrastung zurück und greift nach einer Positionierung des Bolzens in seiner Ruhelage in die Rastung ein. Bei einer anschliessenden Zugbelastung des Bolzens mit einer Kraft vorgegebener Grösse wird die Gegenrastung aus einer Rastung herausgedrückt, und der Bolzen kann aus der Aufnahmeöffnung wieder herausgezogen werden. Die zur Rückfederung der Gegenrastung erforderliche Zugkraft ist grösser als eine Kraft, die bei einer Entnahme des Behälters aus dem Adapter maximal auf den Bolzen übertragen wird. Die Zugkraft ist gleichfalls grösser als bei einem Rücklauf der Mitnehmereinrichtung aufgrund des Adaptergewichtes auf den Bolzen übertragene Gewichtskräfte.

Es ist auch möglich, die Rastung als federndes Element auszubilden, das in eine starre Gegenrastung eingreift. Die Gegenrastung kann beispielsweise als die der Mitnehmerplatte abgewandt angeordnete Oberseite des Adapters ausgebildet sein.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind. In den Zeichnungen zeigen:

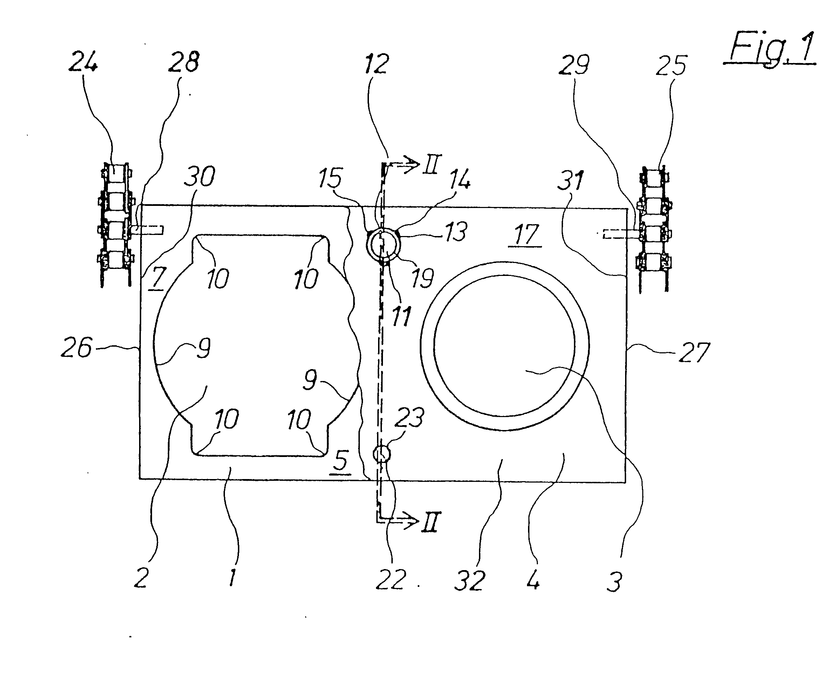

Fig. 1 eine Draufsicht auf eine Mitnehmereinrichtung für zwei Behälter,

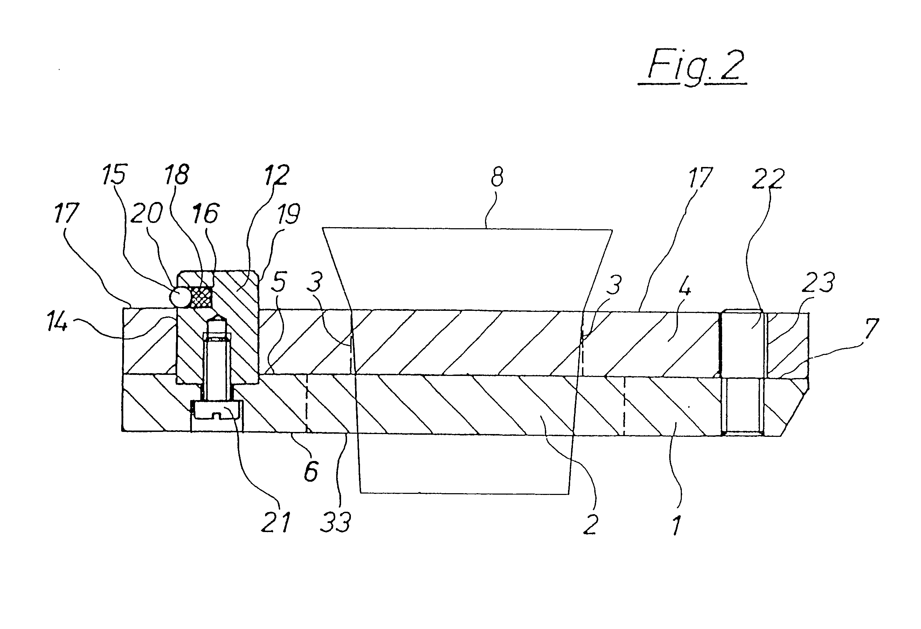

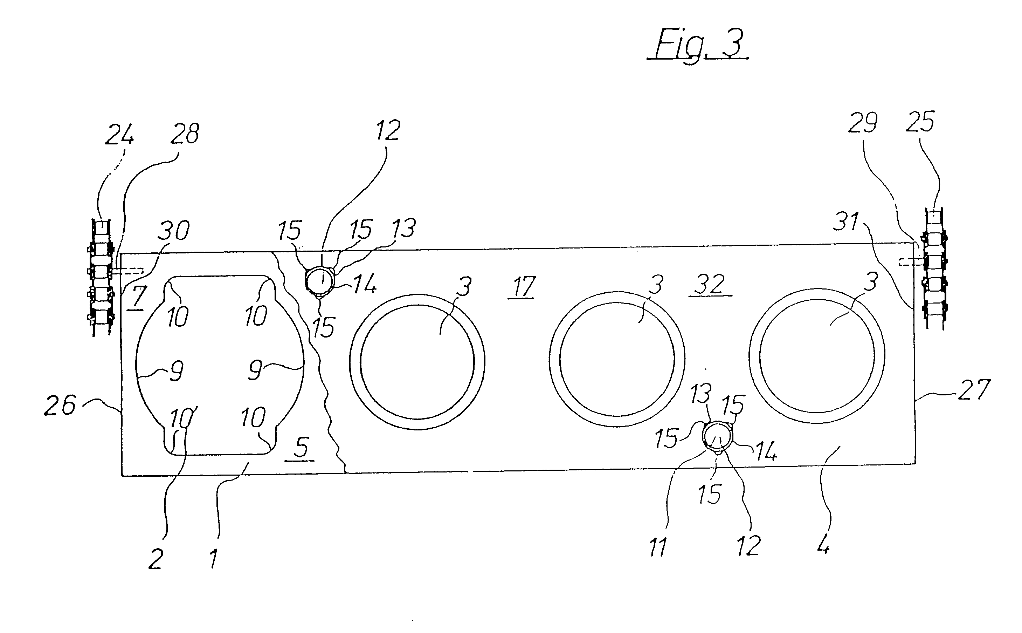

Fig. 2 einen Schnitt entlang der Linie II-II in Figur 1,

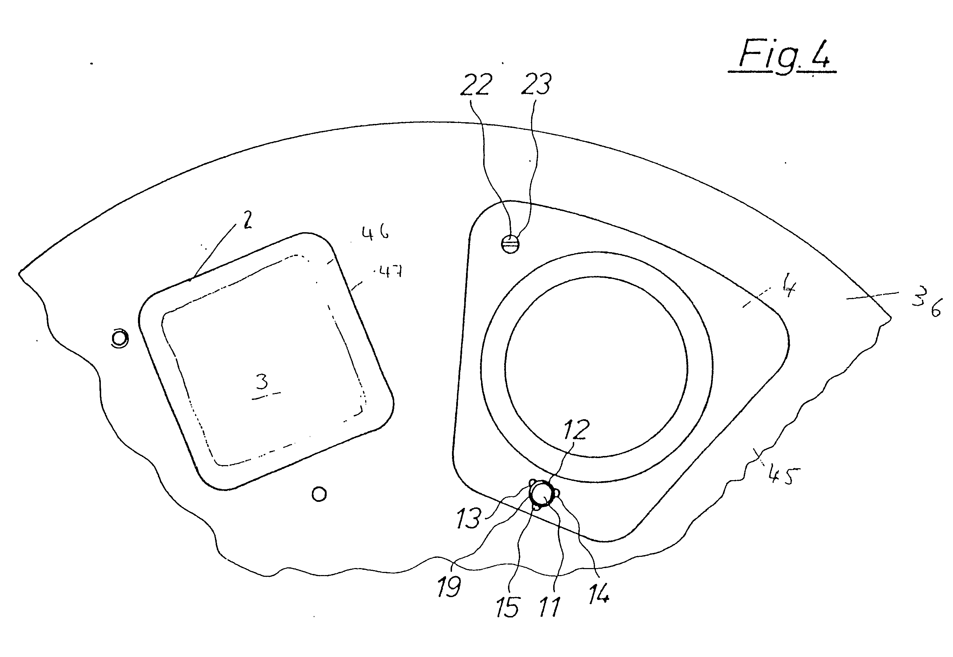

Fig. 3 eine Draufsicht auf eine Mitnehmereinrichtung für vier Behälter,
Fig. 4 eine teilweise geschnittene Seitenansicht einer Mitnehmereinrichtung und

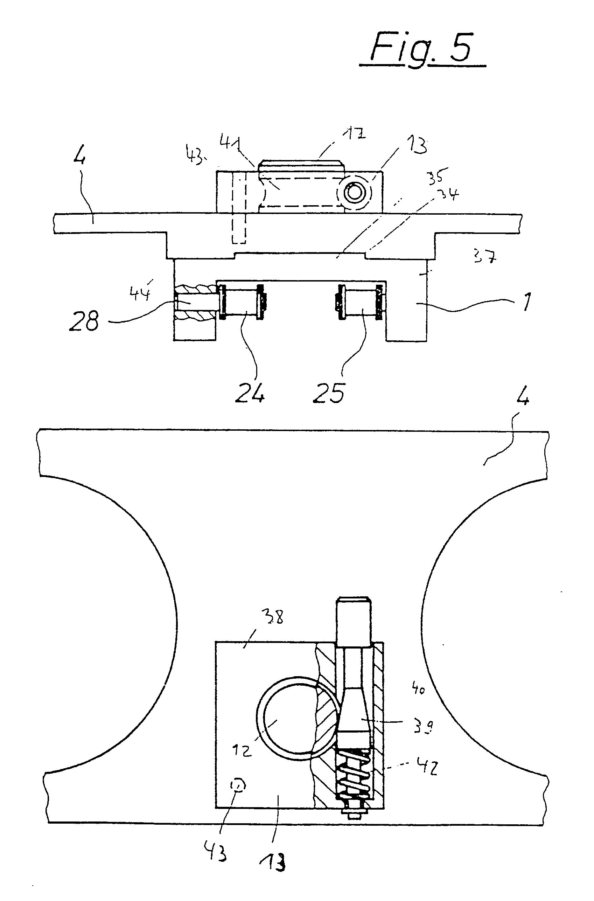

Fig. 5 einen Ausschnitt eines Adapters der Figur 4.

Die Mitnehmereinrichtung besteht im wesentlichen aus einer auf einer Bahn geführten Mitnehmerplatte (1), die im wesentlichen senkrecht zu ihrer Bewegungsebene von zwei Ausnehmungen (2) durchdrungen ist, und einem mit zwei Aufnahmeausnehmungen (3) versehenen Adapter (4), der der Mitnehmerplatte (1) planparallel verläuft und an dieser befestigt ist.

Die Mitnehmerplatte (1) besteht im wesentlichen aus einer rechteckigen Metallplatte mit einander planparallel verlaufenden Oberflächen (5, 6). Auf einer einer Abfülleinrichtung zugewandten Oberseite (7) liegt der Adapter (4) auf einer Mitnehmerplatte (1) auf. Jeweils im Bereich einer Ausnehmung (2) der Mitnehmerplatte (1) ist der Adapter (4) mit einer Aufnahmeausnehmung (3) versehen. Die Ausnehmungen (2) der Mitnehmerplatte (1) sind jeweils einer Vielzahl verschiedener Formate von Behältern (8) angepasst. Sie können teilweise im wesentlichen runde Bereiche und teilweise im wesentlichen eckige Bereiche aufweisen. Jede Aufnahmeausnehmung (3) ist einem vorgewählten Format eines Behälters (8) angepasst. Der Adapter (4) ist lösbar an der Mitnehmerplatte (1) befestigt. Für jede Mitnehmerplatte (1) ist entsprechend der Anzahl unterschiedlicher Formate der Behälter (8) eine Mehrzahl von Adapter (4) vorgesehen, die gegeneinander ausgetauscht werden können. Der Adapter (4) ist mit mindestens einem Befestigungsglied (11) an der Mitnehmerplatte (1) befestigt. Das Befestigungsglied (11) besteht aus einem die Mitnehmerplatte (1) in Richtung auf den Adapter (4) überragenden Bolzen (12), der mit einer Rastung (13) versehen ist, und der eine ihm angepasste Bohrung (14) des Adapters (4) durchdringt. Die Rastung (13) weist drei federbelastete Kugeln auf, die jeweils in einem den Bolzen (12) teilweise radial durchdringenden Sackloch (16) beweglich geführt sind und die sich im Bereich der Bohrung (14) auf einer der Mitnehmerplatte (1) abgewandten Oberfläche (17) des Adapters (4) abstützen. Die Kugeln (15) sind in einer Ebene beweglich gelagert und überragen den Bolzen (12) radial. Die Kugeln (15) bestehen aus Kunststoff und sind von Gummistücken (18) federbelastet, die in den Sacklöchern (16) angeordnet sind.

Die Sacklöcher (16) sind in ihren einer Aussenfläche (19) des Bolzens (12) benachbarten Bereichen jeweils mit einer Querschnittsverengung (20) versehen, deren lichte Weite kleiner als ein Durchmesser einer Kugel (15) ist und an der sich die Kugeln (15) abstützen. Die Kugeln (15) überragen den Bolzen (12) um ca. 1,5 mm. Die Gummistücke (18) nehmen Federwege der Kugeln (15) von mindestens 1,5 mm auf. Der Bolzen (12) ist mit einer Gewindeschraube (21) an der Mitnehmerplatte (1) befestigt. Der Adapter (4) ist mit einer Rastung (13) und einem Zentrierstift (22) an der Mitnehmerplatte (1) befestigt, der die Mitnehmerplatte (1) in Richtung auf den Adapter (4) überragt und in eine ihm angepasste Öffnung (22) des Adapters (4) hineinragt.

Die Mitnehmerplatte (1) un der Adapter (4) weisen im wesentlichen gleiche äussere Abmessungen auf. Sie sind im wesentlichen rechteckig und quer zu ihren Längserstreckungen auf der Bahn geführt. Die Bahn besteht aus einer Kettenbahn, die mit zwei Förderketten (24, 25) versehen ist, die mit der Mitnehmerplatte (1) verbunden sind. Die Mitnehmerplatte (1) ist im Bereich ihrer Schmalseiten (26, 27) mit je einem Kettenbolzen (28, 29) versehen, an der die ihm jeweils zugekehrte Förderkette (24, 25) befestigt ist. Die Kettenbolzen (28, 29) verlaufen in einer Ebene, die einer von der Mitnehmerplatte (1) aufgespannten Ebene planparallel verläuft. Sie sind in Bereichen (30, 31) der Mitnehmerplatte (1) angeordnet, die in Förderrichtung der Förderketten (24, 25) vorne liegen.

Die Mitnehmereinrichtung kann wie folgt eingesetzt werden:

Einem ausgewählten Format eines in der Abfüllverpackungsmaschine zu bearbeitenden Behälters (18) wird ein Adapter (4) entsprechend ausgewählt und auf die Mitnehmerplatte (1) in der Weise aufgelegt, dass der Zentrierstift (22) in die Öffnung (23) hineinragt und mit der Bohrung (14) über die Rastung (13) hinweggeschoben ist. Die Kugeln (15) stützen sich auf der ihnen zugekehrten Oberfläche (17) ab, so dass der Adapter (4) an der Mitnehmerplatte (1) festgelegt ist. Der Adapter (4) bildet auf diese Weise eine Schablone aus, deren Aufnahmeausnehmung (3) mit einem Querschnitt versehen ist, der demjenigen des Behälters (8) im Bereich einer Berührungslinie entspricht, an der entlang der Behälter (8) in der Aufnahmeausnehmung (3) geführt ist.

Für den Fall, dass ein Behälter (8) mit einem abweichenden Format bearbeitet werden soll, kann der Adapter (4) durch einfaches Abziehen von der Mitnehmerplatte (1) getrennt und gegen einen anderen Adapter (4) ausgetauscht werden. Auf diese Weise ist es möglich, eine Abfüllverpackungsmaschine mit einer Vielzahl von Mitnehmerplatten (1) zu versehen, die jeweils in kurzer Zeit und ohne Inanspruchnahme eines Werkzeuges an die jeweils zu bearbeitenden Behälter (8) angepasst werden können, in dem die entsprechenden Adapter (4) auf die Mitnehmerplatte (1) aufgebracht werden.

Da die Abmessungen der Ausnehmungen (2), die die Mitnehmerplatte (1) durchdringen, jeweils dem grössten Format von Behältern (8), die in der Abfüllverpackungsmaschine bearbeitet werden können, angepasst sind, kann mit Hilfe der Maschine eine Vielzahl unterschiedlicher Behälterpackungen gefüllt und verschlossen werden.

Darüber hinaus ist es auch möglich, die Mitnehmerplatte (1) ohne Ausnehmungen (2) mit einer ebenen Oberfläche auszubilden. In diesem Falle stehen die abzufüllenden Behälter (8) auf der Mitnehmerplatte (1) auf und werden lediglich durch die Aufnahmeausnehmungen (3) des Adapters (4) geführt.

Andererseits ist es auch möglich, die Mitnehmerplatte (1) lediglich als eine Halterung (37) auszubilden, an der die Förderketten (24, 25) angekoppelt sind. An dieser Halterung (37) ist der Adapter (4) mit der Rastung befestigt. Bei dieser Rastung kann es sich um eine ringförmige Kupplung (38) handeln, die auf einem Bolzen (12) mit Hilfe eines Kupplungsstiftes (39) eingerastet wird. Dieser Kupplungsstift ragt mit einem an ihm befestigten Konus (40) in eine am Bolzen (12) vorgesehene Rastung in Form einer Rille (13), in der er unter dem Einfluss einer ihn beaufschlagenden Feder (42) einen Formschluss erzeugt. Für eine feste Lage der Kupplung (38) auf dem Adapter (4) sorgt ein Zentrierstift (43), der durch die Rastung (13) ragt. Dieser Zentrierstift ist ausserhalb des Bolzens (12) vorgesehen, so dass er eine Verdrehung der Kupplung (38) um ihren Mittelpunkt verhindert.

Die Führung des Adapter (4) auf der Halterung (37) erfolgt mit Hilfe einer formschlüssigen Auflage. Diese wird von einer Feder (35) gebildet, die sich in Längsrichtung über die Halterung (37) oder quer dazu erstreckt. Dieser Feder (35) ist eine Nut (34) im Adapter (4) angepasst, die sich durch dessen der Halterung (37) zugekehrten Unterseite (44) erstreckt. Diese Nut-Feder-Verbindung (34, 35) sorgt für eine genaue Führung des Adapters (4) auf der Halterung (37).

Bei dieser Ausführungsform werden die abzufüllenden Behälter (8) ausschliesslich in den Aufnahmeausnehmungen (3) des Adapter (4) gehalten. Die Mitnehmerplatte (1) dient lediglich zur Ankopplung des Adapters (4) an die Förderketten (24, 25).

Es ist möglich, die Rastung (13) mit lediglich einer in einem Sackloch (16) federnd gelagerten Kugel (15) auszubilden. Es ist ferner möglich, die Mitnehmerplatte (1) mit einer Mehrzahl von Ausnehmungen (2) und die Adapter (4) mit einer entsprechenden Anzahl von Aufnahmeausnehmungen (3) auszustatten, um die Mitnehmereinrichtung für die gleichzeitige Bearbeitung einer entsprechend der Zahl der Ausnehmungen (2) vorgesehenen Anzahl von Behältern (8) vorzubereiten. Hierfür ist es vorteilhaft, eine Mehrzahl von Rastungen (13) vorzusehen, mit denen der Adapter (4) in der Mitnehmerplatte (1) befestigt ist. Anstelle des Zentrierstiftes (22) kann eine Rastung (13) vorgesehen sein. Die Rastungen (13) sind vorzugsweise gleichmässig über die Mitnehmerplatte (1) verteilt, so dass die für die Auswechselung eines Adapters (4) aufzubringenden Kräfte gleichmässig in den Adapter (4) eingeleitet werden können.

Es ist ferner möglich, eine Mitnehmereinrichtung mit einem Adapter (4) zu versehen, der auf einer der Abfüllvorrichtung abgewandten Unterseite (33) der Mitnehmerplatte (1) angeordnet ist. In diesem Falle kann beispielsweise der Adapter (4) mit Hilfe einer Einschubvorrichtung, die aus schwalbenschwanzförmigen Führungen besteht, unterhalb der Mitnehmerplatte (1) geführt werden und mit Hilfe von federbelasteten Kugeln in einer bestimmten Stellung unter der Mitnehmerplatte (1) eingerastet werden. Eine derartige Schieberhalterung ist auch möglich, wenn der Adapter (4) auf der der Abfüllvorrichtung zugewandten Oberseite der Mitnehmerplatte (1) befestigt wird.

**Patentansprüche**

1. Mitnehmereinrichtung für entlang eines Umlenkrollen aufweisenden Transportbandes zu befördernde Behälter mit mindestens einer Mitnehmerplatte (1), die den zu befördernden Behälter trägt und in deren Bereich mindestens ein Adapter (4) angeordnet ist, der mindestens eine den Behälter aufnehmende Öffnung (3) aufweist und mit der Mitnehmerplatte lösbar verbunden ist, dadurch gekennzeichnet, dass mindestens ein den Adapter (4) mit der Mitnehmerplatte (1) verbindender Bolzen (12) eine Rastung (13) aufweist, die von einer im Bereich des Adapters (4) angeordneten Gegenrastung beaufschlagt ist.

2. Mitnehmereinrichtung nach Anspruch 1, dadurch gekennzeichnet, dass der Adapter (4) auf der Mitnehmerplatte (1) aufliegt.

3. Mitnehmereinrichtung nach Anspruch 1 und 2, dadurch gekennzeichnet, dass der Adapter (4) und die Mitnehmerplatte (1) zueinander planparallel verlaufen.

4. Mitnehmereinrichtung nach Anspruch 1 bis 3, dadurch gekennzeichnet, dass der Adapter (4) auf einer einer Abfülleinrichtung zugewandten Oberseite (7) der Mitnehmerplatte (1) aufliegt.

5. Mitnehmereinrichtung nach Anspruch 1 bis 3, dadurch gekennzeichnet, dass der Adapter (4) an einer der Abfülleinrichtung abgewandten Unterseite (33) der Mitnehmerplatte (1) anliegt.

6. Mitnehmereinrichtung nach Anspruch 1 bis 5, dadurch gekennzeichnet, dass in der Mitnehmerplatte (1) mindestens eine Ausnehmung (2) vorgesehen ist, in deren Durchlassquerschnitt der Behälter (8) mit seiner seiner Einfüllöffnung abgewandten Unterseite hineinragt, und mindestens eine Aufnahmeausnehmung (3) im Adapter (4) an einer den in der Mitnehmerplatte (1) vorgesehenen Ausnehmungen (2) entsprechenden Stelle angeordnet ist.

7. Mitnehmereinrichtung nach Anspruch 5 und 6, dadurch gekennzeichnet, dass für jede Aufnahmeausnehmung (3) eine ihr jeweils zugekehrte Ausnehmung (2) vorgesehen ist.

8. Mitnehmereinrichtung nach Anspruch 5 bis 7, dadurch gekennzeichnet, dass die Anzahl der Aufnahmeausnehmungen (3) einer Anzahl von Ausnehmungen (2) entspricht.

9. Mitnehmereinrichtung nach Anspruch 5 bis 7, dadurch gekennzeichnet, dass die Mitnehmerplatte (1) als eine Standplatte ausgebildet ist, auf der der Behälter (8) in einer Aufnahmeausnehmung (3) des Adapters (4) steht.

10. Mitnehmereinrichtung nach Anspruch 1 bis 9, dadurch gekennzeichnet, dass die Rastung (13) mindestens eine federbelastete Kugel (15) aufweist, die in einem den Bolzen (12) teilweise radial durchdringenden Sackloch (16) beweglich geführt ist, den Bolzen (12) mit einem Teil ihrer Oberfläche radial überragt und die sich im Bereich der Bohrung (14) auf einer der Mitnehmerplatte (1) abgewandten Oberfläche (17) des Adapters (4) abstützt.

11. Mitnehmereinrichtung nach Anspruch 10, dadurch gekennzeichnet, dass die Kugeln (15) von Gummistücken (18) federbelastet sind, die in den Sacklöchern (16) angeordnet sind.

12. Mitnehmereinrichtung nach Anspruch 10 und 11, dadurch gekennzeichnet, dass die Sacklöcher (16) in ihren einer Aussenfläche (19) des Bolzens (12) benachbarten Bereichen jeweils mit einer Querschnittsverengung (20) versehen sind, deren lichte Weite kleiner als ein Durchmesser einer Kugel (15) ist.

13. Mitnehmereinrichtung nach Anspruch 1 bis 12, dadurch gekennzeichnet, dass der Bolzen (12) mit einer Gewindeschraube (21) an der Mitnehmerplatte (1) befestigt ist.

14. Mitnehmereinrichtung nach Anspruch 1 bis 13, dadurch gekennzeichnet, dass der Adapter (4) mit mindestens einer Rastung (13) und mindestens einem Zentrierstift (22) an der Mitnehmerplatte (1) festgelegt ist, der die Mitnehmerplatte (1) in Richtung auf den Adapter (4) überragt und in eine ihm angepasste Öffnung (23) im Adapter (4) hineinragt.

15. Mitnehmereinrichtung nach Anspruch 1 bis 14, dadurch gekennzeichnet, dass die Mitnehmerplatte (1) an einer sie transportierenden Kettenbahn befestigt ist, die in Längsrichtung unter einer den Behälter (8) füllenden Abfüllvorrichtung verläuft.

## Claims

1. An entrainment device for containers which are to be conveyed along a transport belt having direction-changing rollers, comprising at least one entrainment plate (1) which carries the containers to be conveyed and in the region of which there is disposed at least one adaptor (4) which has at least one opening (3) for receiving the container and which is releasably connected to the entrainment plate characterised in that at least one pin (12) connecting the adaptor (4) to the entrainment plate (1) has a retaining means (13) which is acted upon by a co-operating retaining means arranged in the region of the adaptor (4).

2. An entrainment device according to claim 1 characterised in that the adaptor (4) lies on the entrainment plate (1).

3. An entrainment device according to claim 1 and claim 2 characterised in that the adaptor (4) and the entrainment plate (1) extend in planeparallel relationship with each other.

4. An entrainment device according to claims 1 to 3 characterised in that the adaptor (4) lies on a top side (7) of the entrainment plate (1), which is towards a filling means.

5. An entrainment device according to claims 1 to 3 characterised in that the adaptor (4) bears against an underside (33) of the entrainment plate (1), which is remote from the filling means.

6. An entrainment device according to claims 1 to 5 characterised in that provided in the entrainment plate (1) is at least one opening (2), into the passage cross-section of which the container (8) projects with its underside which is remote from its filling opening, and at least one receiving opening (3) is provided in the adaptor (4) at a location corresponding to the openings (2) in the entrainment plate (1).

7. An entrainment device according to claims 5 and 6 characterised in that provided for each receiving opening (3) is a respective opening (2) which faces towards same.

8. An entrainment device according to claims 5 to 7 characterised in that the number of receiving openings (3) corresponds to a number of openings (2).

9. An entrainment device according to claims 5 to 7 characterised in that the entrainment plate (1) is in the form of a support plate on which the container (8) stands in a receiving opening (3) in the adaptor (4).

10. An entrainment device according to claims 1 to 9 characterised in that the retaining means (13) has at least one spring-loaded ball (15) which is movably guided in a blind hole (16) extending partially radially through the pin (12), which radially projects beyond the pin (12) with a part of its surface and which is supported in the region of the bore (14) against a surface (17) of the adaptor (4), which is remote from the entrainment plate (1).

11. An entrainment device according to claim 10 characterised in that the balls (15) are spring-loaded by rubber pieces (18) which are arranged in the blind holes (16).

12. An entrainment device according to claims 10 and 11 characterised in that in their regions adjacent an outside surface (19) of the pin (12) the blind holes (16) are respectively provided with a reduction (20) in cross-section, the internal width thereof being smaller than a diameter of a ball (15).

13. An entrainment device according to claims 1 to 12 characterised in that the pin (12) is secured to the entrainment plate (1) by a threaded screw (21).

14. An entrainment device according to claims 1 to 13 characterised in that the adaptor (4) is fixed to the entrainment plate (1) with at least one retaining means (13) and at least one centering pin (22) which projects beyond the entrainment plate (1) towards the adaptor (4) and which projects into an opening (23) in the adaptor (4), which is suited thereto.

15. An entrainment device according to claims 1 to 14 characterised in that the entrainment plate (1) is secured to a chainway which transports it and which extends in the longitudinal direction under a filling means for filling the container (8).

**Revendications**

1. Dispositif d'entraînement pour des récipients à transporter le long d'un tapis transporteur présentant des poulies de renvoi comprenant au moins une plaque d'entraînement (1) qui supporte le récipient à transporter et au voisinage de laquelle est disposé au moins un adaptateur (4) qui présente au moins un orifice (3) recevant le récipient et qui est relié de manière détachable à ladite plaque d'entraînement, caractérisé par le fait qu'au moins une cheville (12) reliant l'adaptateur (4) à la plaque d'entraînement (1) présente un cran (13) qui est en prise avec un contre-cran disposé dans la zone de l'adaptateur (4).

2. Dispositif d'entraînement selon la revendication 1, caractérisé par le fait que l'adaptateur (4) s'appuie sur la plaque d'entraînement (1).

3. Dispositif d'entraînement selon l'une des revendications 1 et 2, caractérisé par le fait que l'adaptateur (4) et la plaque d'entraînement (1) s'étendent dans des plans mutuellement parallèles.

4. Dispositif d'entraînement selon l'une des revendications 1 à 3, caractérisé par le fait que l'adaptateur (4) s'appuie sur un côté supérieur (7) de la plaque d'entraînement (1) orienté vers un dispositif de remplissage.

5. Dispositif d'entraînement selon l'une des revendications 1 à 3, caractérisé par le fait que l'adaptateur (4) s'appuie sur un côté inférieur (3) de la plaque d'entraînement (1) opposé au dispositif de remplissage.

6. Dispositif d'entraînement selon l'une des revendications 1 à 5, caractérisé par le fait que dans la plaque d'entraînement (1) est prévu au moins un évidement (2) dans la section de passage duquel pénètre le récipient (8) par son côté inférieur opposé à son orifice de remplissage et par le fait que dans l'adaptateur (4), en un endroit correspondant aux évidements (2) prévus dans la plaque d'entraînement (1) est pratiqué un évidement de réception (3).

7. Dispositif d'entraînement selon l'une des revendications 5 et 6, caractérisé par le fait que pour chaque évidement de réception (3) est prévu un évidement (2) orienté respectivement vers l'évidement (3).

8. Dispositif d'entraînement selon l'une des revendications 5 à 7, caractérisé par le fait que le nombre des évidements de réception (3) correspond à un même nombre d'évidements (2).

9. Dispositif d'entraînement selon l'une des revendications 5 à 7, caractérisé par le fait que la plaque d'entraînement (1) est réalisée sous la forme d'une plaque de base sur laquelle est posé le récipient (8) dans un évidement de réception (3) de l'adaptateur (4).

10. Dispositif d'entraînement selon l'une des revendications 1 à 9, caractérisé par le fait que le cran (13) présente au moins une bille (15) chargée par un ressort qui est mobile à l'intérieur d'un trou borgne (16), ladite bille pénétrant de manière partiellement radiale dans la cheville (12), faisant saillie de la cheville (12) par une partie de sa surface et s'appuyant au voisinage du perçage (14) sur une surface (17) de l'adaptateur (4) opposée à la plaque d'entraînement (1).

11. Dispositif d'entraînement selon la revendication 10, caractérisé par le fait que les billes (15) sont chargées élastiquement par des éléments en caoutchouc (18) qui sont disposés à l'intérieur des trous borgnes (16).

12. Dispositif d'entraînement selon l'une des revendications 10 et 11, caractérisé par le fait que les trous borgnes (16) dans leurs zones adjacentes à une surface extérieure (19) de la cheville (12) sont munis respectivement d'un rétrécissement (20) de leur section dont l'ouverture est inférieure au diamètre d'une bille (15).

13. Dispositif d'entraînement selon l'une des revendications 1 à 12, caractérisé par le fait que la cheville (12) est fixée par une vis filetée (21) sur la plaque d'entraînement (1).

14. Dispositif d'entraînement selon l'une des revendications 1 à 13, caractérisé par le fait que l'adaptateur (4) est fixé par au moins un cran (13) et au moins une tige de centrage (22) sur la plaque d'entraînement, ladite tige de centrage (22) faisant saillie de la plaque d'entraînement en direction de l'adaptateur (4) et pénétrant dans un orifice (23) prévu dans l'adaptateur (4) et ajusté à la tige (22).

15. Dispositif d'entraînement selon l'une des revendications 1 à 14, caractérisé par le fait que la plaque d'entraînement (1) est fixée sur un tapis à chaînes qui la transporte et qui se déplace longitudinalement sous un dispositif de remplissage qui remplit le récipient (8).

EP 0 173 798 B1

Fig.1

Fig.2

_Fig. 3_

EP 0 173 798 B1

Fig. 4

EP 0 173 798 B1

_Fig. 5_